# EUROPEAN PATENT SPECIFICATION

(11) **EP 4 072 085 B1**
(45) Date of publication and mention of the grant of the patent: **03.09.2025**
(21) Application number: 20903344.8
(22) Date of filing: 08.12.2020
(51) Int. Cl.: H04L 47/60, H04L 47/6275, H04L 47/24, H04L 47/50

(54) **TRAFFIC SCHEDULING METHOD, ELECTRONIC DEVICE AND STORAGE MEDIUM**
VERKEHRSPLANUNGSVERFAHREN, ELEKTRONISCHE VORRICHTUNG UND SPEICHERMEDIUM
PROCÉDÉ DE PLANIFICATION DE TRAFIC, DISPOSITIF ÉLECTRONIQUE ET SUPPORT DE STOCKAGE

(30) Priority: 16.12.2019 CN 201911291974
(43) Date of publication of application: 12.10.2022
(73) Proprietor: ZTE Corporation, Shenzhen, Guangdong 518057 (CN)
(72) Inventor: REN, Kun, Shenzhen, Guangdong 518057 (CN); PAN, Kang, Shenzhen, Guangdong 518057 (CN)
(74) Representative: Savi, Massimiliano
(86) International application number: PCT/CN2020/134650
(87) International publication number: WO 2021/121086

(56) References cited:
- EP-A1- 2 950 490
- WO-A1-2017/211287
- WO-A1-2018/188487
- CN-A- 107 306 232
- CN-A- 107 483 361
- CN-A- 107 872 403
- CN-A- 107 872 403
- US-A1- 2019 068 516
- "Advanced Queuing Topics QOS-Enabled Networks: Tools and Foundations", 1 January 2011, WILEY, ISBN: 978-0-47-068697-3, article MIGUEL BARREIROS ET AL: "Advanced Queuing Topics QOS-Enabled Networks: Tools and Foundations", pages: 148 - 164, XP055143537, DOI: 10.1002/9780470976814.ch8

## Description

### TECHNICAL FIELD

Embodiments of the present application relate to the technical field of communications, and in particular, to a traffic scheduling method, an electronic device, and a storage medium.

### BACKGROUND

At present, with the expansion of user scale and the increase of service types, a network communication device is required not only to further refine and distinguish service traffic, but also to perform unified management and hierarchical scheduling on transmission objects which have, for example, multiple users, multiple services, and multiple traffic. A multi-queue technology may be used to implement various Hierarchical Quality of Service (HQoS) functions, such as traffic flow limiting, congestion avoidance, traffic shaping, and queue scheduling. Hierarchical scheduling implemented based on the multi-queue technology not only distinguishes users, but also distinguishes services and traffic, which can provide refined service quality assurance and save network operation and maintenance costs on the whole.

However, the inventor of the present application finds that, when traffic is scheduled with a current HQoS strategy, if the HQoS strategy is configured on a sub-interface, the HQoS strategies of sub-interfaces are independent of each other so the HQoS strategies can perform scheduling and flow limiting on only service traffic of each user instead of port-level service traffic; if the HQoS policy is configured on a port, an overall scheduling and flow limiting may be performed on all service traffic on the port, but scheduling and flow limiting on the service traffic of the user cannot be taken into account at the same time.

In WO 2017/211287 A1, a method and device for constructing a scheduling model are disclosed. The method includes: determining, according to a service requirement of a current service scenario, a scheduling level number of an HQoS scheduling model to be constructed as N, wherein N is a positive integer greater than or equal to 2; selecting, from storage resources, scheduling units for respective scheduling levels of the N scheduling levels, wherein each storage resource is provided with various types of scheduling units in advance; and configuring linking relationships between the scheduling units of the respective scheduling levels.

US 2019/068516 A1 describes a network device, a controller, a queue management method, and a traffic management chip. The method may be applied to a traffic management chip that uses an HQoS technology, and can include receiving a queue management instruction sent by a controller, where the queue management instruction includes an identifier of a first scheduler and an identifier of a first queue, and the first scheduler is one of multiple first-level schedulers. The method may also include controlling, according to the queue management instruction, scheduling of the first queue by the first scheduler, where a queue scheduled by the first scheduler belongs to a queue resource pool of the TM chip, and the queue resource pool includes at least one to-be-allocated queue.

### SUMMARY

According to some embodiments of the present application, a traffic scheduling method, an electronic device, and a storage medium are provided. The features of the method, the electronic device and the storage medium according to embodiments of the present disclosure are set out in the appended set of claims, which defines the invention.

### BRIEF DESCRIPTION OF DRAWINGS

One or more embodiments are illustrated by way of figures corresponding to the embodiments in the accompanying drawings. The illustrative descriptions shall not be construed to limit the embodiments.
FIG. 1 is a flowchart of a traffic scheduling method according to a first embodiment of the present application;
FIG. 2 is a flowchart of a traffic scheduling method according to a second embodiment of the present application;
FIG. 3 is a schematic structural diagram of a traffic scheduling system according to the second embodiment of the present application;
FIG. 4 is a flowchart of a traffic scheduling method according to a third embodiment of the present application; and
FIG. 5 is a schematic structural diagram of an electronic device according to a fourth embodiment of the present application.

### DETAILED DESCRIPTION

In order to make the objectives, technical schemes, and advantages of the embodiments of the present application clearer, various embodiments of the present application will be described below in detail in conjunction with the drawings. However, those having ordinary skill in the art may understand that, in the embodiments of the present application, numerous technical details are set forth in order to enable a reader to better understand the present application. However, the technical schemes claimed in the present application can be implemented without these technical details and various changes and modifications based on the embodiments below. The embodiments below are divided for the convenience of description, and should not constitute any limitation on specific embodiments of the present application. The embodiments may be combined with each other and mutually referred to without contradiction.

An objective of the embodiments of the present application is to provide a traffic scheduling method, an electronic device, and a storage medium, so as to perform user-level and port-level scheduling and flow limiting on service traffic simultaneously under multi-service scenarios where HQoS functions are applied.

A first embodiment of the present application relates to a traffic scheduling method. This embodiment is applied to a network communication device and implemented based on HQoS functions. This embodiment involves: acquiring service traffic received at a data receiving port; performing first scheduling on the service traffic according to a preset first scheduling strategy, where the first scheduling strategy is a user-level scheduling strategy; forwarding the service traffic on which the first scheduling is performed to the data receiving port; performing second scheduling on the service traffic according to a preset second scheduling strategy, where the second scheduling strategy is a port-level scheduling strategy; and sending the service traffic on which the second scheduling is performed through a data sending port.

Implementation details of the traffic scheduling method in this embodiment are described below in conjunction with the accompanying drawings. The implementation details are provided below for ease of understanding only and are not necessary for implementation of the scheme.

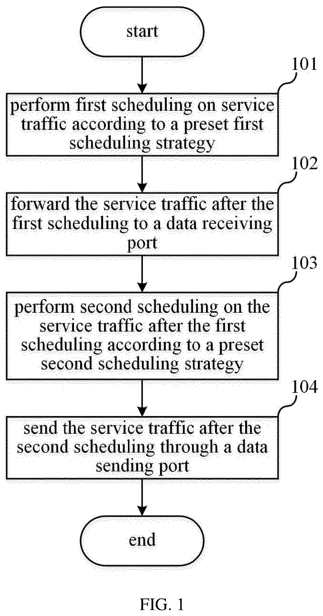

The traffic scheduling method in this embodiment, as shown in FIG. 1, includes the following steps.

At a step of 101, a first scheduling is performed on service traffic according to a preset first scheduling strategy. The first scheduling strategy is a user-level scheduling strategy.

In some cases, in this embodiment, a data receiving port is a downlink switching-side interface of a network communication device. The network communication device receives service traffic sent from a backplane switching network through a downlink switching-side interface, parses the service traffic, and acquires a forwarding priority of the service traffic during traffic scheduling.

The first scheduling strategy is a user-level-based traffic scheduling strategy. Attributes of the service traffic include user attributes and service attributes. The first scheduling strategy may schedule service traffic according to a priority of a user to which the service traffic belongs, or schedule service traffic according to a priority of a specific service to which the service traffic belongs. In scenarios where HQoS functions are applied, different service traffic may pass through different sub-interfaces. If the first scheduling strategy is bound to a sub-interface, each sub-interface can schedule only service traffic passing through the sub-interface itself.

At a step of 102, the service traffic on which the first scheduling is performed is forwarded to a data receiving port.

In some cases, after the first scheduling on the service traffic, the service traffic is forwarded to an uplink line-side interface through a loopback port inside the device and then sent to a downlink switching-side interface through the uplink line-side interface, to be received again through the downlink switching-side interface.

At a step of 103, second scheduling is performed on the service traffic on which the first scheduling is performed according to a preset second scheduling strategy.

According to the claimed invention, the second scheduling strategy is a port-level-based traffic scheduling strategy, and may be bound to a parent interface. Because all service traffic have to pass through the parent interface, an overall scheduling can be performed on all service traffic having to pass through ports according to the second scheduling strategy, which ensures scheduling and flow limiting of port-level traffic after the service traffic has been distinguished based on user or service priorities in the first scheduling.

At a step of 104, the service traffic on which the second scheduling is performed is forwarded to a data sending port.

According to the claimed invention, the data sending port is a downlink line-side interface. After the second scheduling on the service traffic, the service traffic that has undergone the entire scheduling process is directly forwarded to the data sending port, and then sent to a line-side device through the data sending port.

In an example, the first scheduling on the service traffic mainly realizes scheduling on traffic flow limiting and internal priorities based on users (which may be differentiated by a virtual local area network (VLAN)), and the second scheduling on the service traffic does not care about specific user VLAN information, but only performs flow limiting and priority scheduling on all service traffic on the port.

Compared with the existing technology, in the embodiment, the network communication device, after acquiring service traffic, first performs the first scheduling on the service traffic according to a user-level-based scheduling strategy, and then performs second scheduling on the service traffic on which the first scheduling is performed according to a port-level-based scheduling strategy, so as to achieve secondary enqueueing of the service traffic, so that user-level and port-level traffic scheduling and flow limiting can be implemented at the same time when the service traffic is managed using HQoS functions.

A second embodiment of the present application relates to a traffic scheduling method. In this embodiment, how to perform first scheduling on service traffic according to a first scheduling strategy and how to perform second scheduling on the traffic on which the first scheduling is performed according to a second scheduling strategy are described.

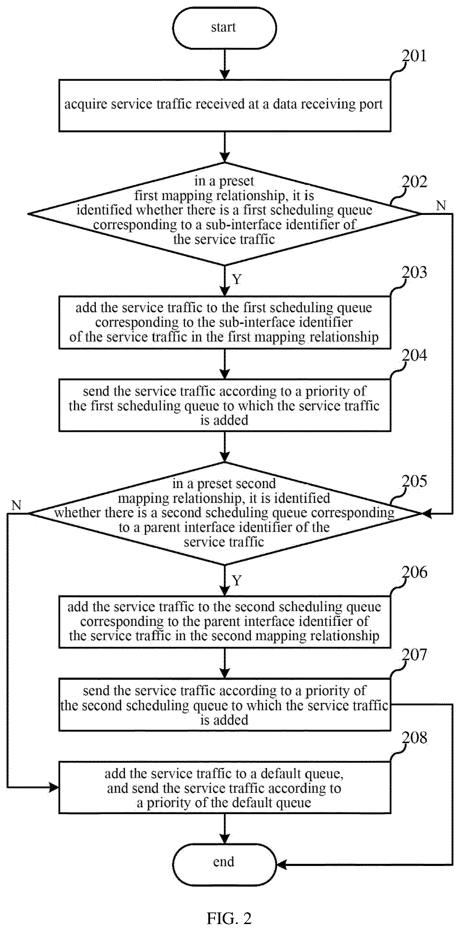

The traffic scheduling method in this embodiment, as shown in FIG. 2, includes steps as follow.

At a step of 201, service traffic received at a data receiving port is acquired.

At a step of 202, in a preset first mapping relationship, it is identified whether there is a first scheduling queue corresponding to a sub-interface identifier of the service traffic. If the first scheduling queue corresponding to the sub-interface identifier of the service traffic presents in the preset first mapping relationship, a step of 203 is performed. If the first scheduling queue corresponding to the sub-interface identifier of the service traffic does not present in the preset first mapping relationship, a step of 205 is performed.

At the step of 203, the service traffic is added to the first scheduling queue corresponding to the sub-interface identifier of the service traffic in the first mapping relationship.

At a step of 204, the service traffic is sent according to a priority of the first scheduling queue to which the service traffic is added.

In some cases, there are three manners as follow to bind an HQoS scheduling strategy to an interface.
(1) Direct binding to an interface: HQoS is performed only on traffic passing through the interface.
(2) Binding to a parent interface in an overwrite mode: HQoS is performed on traffic of the parent interface as well as on traffic of all sub-interfaces corresponding to the parent interface according to the bound HQoS strategy.
(3) Binding to an interface in a multiple-level mode: the traffic is informed of secondary enqueueing.

In the embodiment, the HQoS scheduling strategy is bound to the sub-interfaces in the multiple-level mode, and bound to the parent interface in the overwrite mode. A first scheduling queue corresponding to the service traffic is identified in a first mapping relationship according to a sub-interface identifier, and the first scheduling is done through the sub-interface. The first mapping relationship is a mapping relationship between users to which services belong and queue identifiers, and stored in an ACL (access control list) table; and a corresponding second scheduling queue is identified in the ACL table according to a parent interface identifier, and second scheduling is done through the parent interface.

In some cases, the first scheduling strategy is pre-configured, and the device binds the first scheduling strategy to sub-interfaces according to preset configuration, and then attaches a queue to each sub-interface according to the first scheduling strategy. Each queue has a different priority, and the priority is determined according to the pre-configured first scheduling strategy. In actual operation, when multiple traffic exists on an identical interface, the service traffic in queues with higher priorities may be preferentially forwarded. In this configuration, when the first scheduling is performed on the service traffic, the sub-interface may write a flag of secondary scheduling to the service traffic, which is added to a queue attached to an internal loopback port. After the service traffic undergoes the first scheduling, the service traffic may be forwarded to a downlink switching-side interface through the loopback port.

In some cases, the first mapping relationship in the embodiment is a mapping relationship between sub-interface identifiers and first scheduling queues. The first mapping relationship is stored in an ACL table. After the received service traffic is parsed, firstly, a sub-interface that the service traffic passes through is determined according to a scheduling tree under the pre-configured first scheduling strategy, and then a first scheduling queue corresponding to a sub-interface identifier is identified in the ACL table according to the first mapping relationship. If the first scheduling queue corresponding to the sub-interface identifier is found in the ACL table, the service traffic is added to the first scheduling queue. If the first scheduling queue corresponding to the sub-interface identifier is not found in the ACL table, the first scheduling on the service traffic is skipped and second scheduling is directly performed. The step of 205 is performed to identify a sub-interface identifier corresponding to the service traffic in a preset second mapping relationship.

At the step of 205, in a preset second mapping relationship, it is identified whether there is a second scheduling queue corresponding to a parent interface identifier of the service traffic. If a second scheduling queue corresponding to the sub-interface identifier of the service traffic presents in the preset second mapping relationship, a step of 206 is performed. If the second scheduling queue corresponding to the sub-interface identifier of the service traffic does not present in the preset second mapping relationship, a step of 208 is performed.

At the step of 206, the service traffic is added to the second scheduling queue corresponding to the parent interface identifier of the service traffic in the second mapping relationship.

In some cases, the second mapping relationship in the embodiment is a mapping relationship between parent interface identifiers and second scheduling queues. The second mapping relationship is also stored in the ACL table. After the service traffic is received for a second time, a parent interface that the service traffic passes through is determined according to a scheduling tree under the pre-configured second scheduling strategy, and then a second scheduling queue corresponding to the parent interface identifier is identified in the ACL table according to the second mapping relationship. If the second scheduling queue corresponding to the parent interface identifier is found in the ACL table, the service traffic is added to the second scheduling queue. If the second scheduling queue corresponding to the sub-interface identifier does not present in the ACL table, which means that a priority of a user attribute or a service attribute of the service traffic is not set in the pre-configured scheduling strategy, the step of 208 is performed to add the service traffic to a default queue and perform, according to a priority of the default queue, second scheduling on the service traffic not completing ACL rule matching.

At a step of 207, the service traffic is sent according to a priority of the second scheduling queue to which the service traffic is added.

In some cases, in the embodiment, an HQoS scheduling strategy is bound to the parent interface in an overwrite mode, the corresponding second scheduling queue is identified in the ACL table according to the parent interface identifier, and second scheduling is done through the parent interface. In this configuration, the pre-configured second scheduling strategy is bound to the parent interface (the HQoS scheduling strategy is bound in the overwrite mode). The network communication device attaches queue to each of sub-interfaces according to the bound second scheduling strategy. Each queue has a different priority. In actual operation, when multiple traffic presents on an identical interface, the service traffic in queues with higher priorities may be preferentially forwarded. After the second scheduling, the service traffic is sent through a downlink line-side to complete the entire scheduling process of the service traffic.

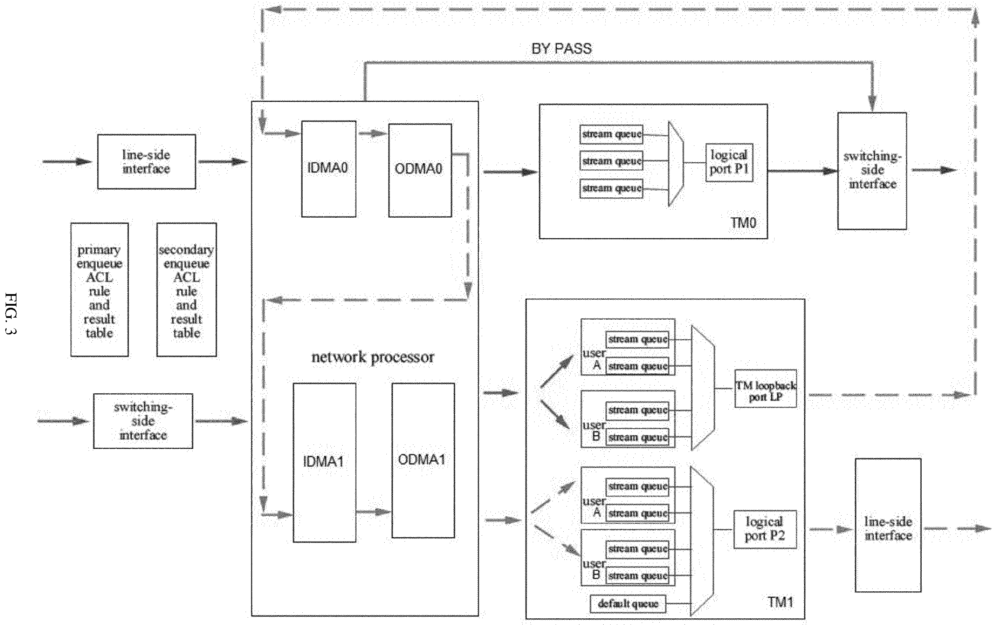

In an example, a traffic scheduling system in the embodiment has a structure as shown in FIG. 3, and includes elements as follow.

A network process (NP) is configured to parse traffic received at a downlink switching-side interface, identify, according to an interface identifier of the service traffic, a queue identifier having a mapping relationship with the interface identifier of the service traffic in the ACL table, then forward the parsed service traffic to a traffic manager TM1, and send related information such as the queue identifier to the traffic manager TM1. After first scheduling on the service traffic, the traffic manager TM1 forwards the service traffic to an uplink line-side interface through a loopback port. The NP is further configured to forward the service traffic to the downlink switching-side interface by means of transparent transmission. A forwarding path of the service traffic during the first scheduling is represented by the solid arrows in the figure, and a forwarding path of the service traffic during the second scheduling is represented by the dashed arrows in the figure.

The traffic manager TM1 is configured to add, according to the queue identifier sent by the NP, the service traffic parsed by the NP to a corresponding queue, then assign different priorities to queues according to a preset HQoS strategy, and complete scheduling and flow limiting on the service traffic according to the priorities of the queues. During the first traffic scheduling, the service traffic is directly added, according to the queue identifier, to a corresponding queue attached to a TM loopback port LP, forwarded to the uplink line-side interface after the first scheduling, and then transparently transmitted to the downlink switching-side interface by the NP. Second scheduling on the traffic starts. Upon completion of the second scheduling, the service traffic is forwarded from the downlink line-side interface through a logical port P2.

In an example, after the NP receives service traffic from the downlink switching-side interface for the first time and parses the service traffic, if a queue identifier having a mapping relationship with a sub-interface identifier is not found in a preset ACL table according to the sub-interface identifier of the service traffic, it is continuously identified whether there is a queue identifier having a mapping relationship with a parent interface identifier in the preset ACL table according to the parent interface identifier of the service traffic. If a queue identifier having a mapping relationship with the parent interface is not found in the preset ACL table according to the parent interface identifier of the service traffic, the NP sends default queue information to the traffic manager TM1, and then the traffic manager TM1 adds the service traffic to a default queue, and forwards the service traffic according to a priority of the default queue, to complete scheduling on the service traffic.

Division of the steps of the above method is only for ease of description, and during implementation, the steps may be combined into one step or some steps may be split into multiple steps, all of which fall within the protection scope of the present patent as long as an identical logical relationship is included. Insignificant modifications added to or insignificant designs introduced in an algorithm or a procedure without changing the core of the algorithm or the procedure fall within the protection scope of the patent.

A third embodiment of the present application relates to a traffic scheduling method. The third embodiment is substantially the identical to the second embodiment, with a main difference as follows. In the second embodiment, during the first scheduling on the service traffic, according to a sub-interface identifier of the service traffic, a first scheduling queue corresponding to the sub-interface identifier is identified in a first mapping relationship; during the second scheduling on the service traffic, according to a parent interface identifier of the service traffic, a second scheduling queue corresponding to the parent interface identifier is identified in a second mapping relationship. In the third embodiment of the present application, during the first scheduling on the service traffic, according to an interface identifier of the service traffic, a first scheduling queue corresponding to the interface identifier is identfied in a first mapping relationship; during the second scheduling on the traffic, according to an Internet protocol (IP) priority field of the service traffic, a second scheduling queue corresponding to the IP priority field is identified in a second mapping relationship.

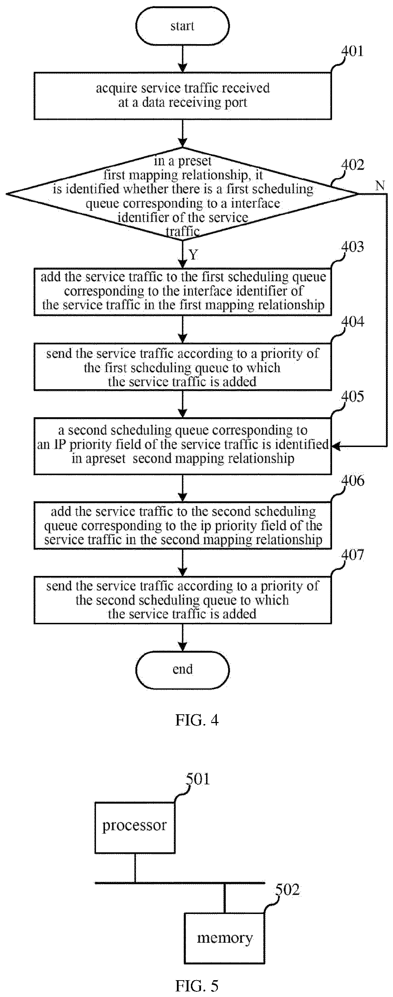

A traffic scheduling method according to the third embodiment of the present application, as shown in FIG. 4, includes steps as follow.

At a step of 401, service traffic received at a data receiving port is acquired.

At a step of 402, a first scheduling strategy corresponding to an interface identifier of the service traffic is identified in a preset first mapping relationship, where the interface identifier is a combination of a sub-interface identifier and a parent interface identifier. If the first scheduling queue corresponding to the interface identifier of the service traffic presents in the preset first mapping relationship, a step of 403 is performed. If the first scheduling queue corresponding to the interface identifier of the service traffic does not present in the preset first mapping relationship, a step of 405 is performed.

At the step of 403, the service traffic is added to the first scheduling queue corresponding to the interface identifier of the service traffic in the first mapping relationship.

At a step of 404, the service traffic is sent according to a priority of the first scheduling queue to which the service traffic is added.

In some cases, the first mapping relationship stored in the ACL table in the embodiment is a mapping relationship between combinations of sub-interface identifiers and parent interface identifier of service traffic and first scheduling queues. The first scheduling strategy is an HQoS strategy bound to a parent interface in a multiple-level mode. The HQoS strategy distinguishes priorities of service traffic based on user information. Steps S402 to S404 are similar to steps S202 to S204 in the second embodiment of the present application. Other implementation details have been described in the second embodiment of the present application, which are not described in detail herein.

At the step of 405, a second scheduling queue corresponding to an IP priority field of the service traffic is identified in a preset second mapping relationship.

In some cases, a QoS-template (port-based 8 PHB scheduling and flow limiting) scheduling and flow limiting strategy is pre-bound to the parent interface. This strategy distinguishes priorities of service traffic based on IP priority fields in service traffic messages. Therefore, in this embodiment, the second mapping relationship is a mapping relationship between IP priority fields and second scheduling queues. The second mapping relationship is stored in an outbound port table. After the service traffic is parsed, the IP priority field in the service traffic needs to be acquired, and then a second scheduling queue corresponding to the service traffic according to the IP priority field is identified in the outbound port table. Because all traffic needs to be forwarded from a logical outbound port through the parent interface, this strategy binding manner can implement port-level-based traffic scheduling.

In an example, after parsing the service traffic, the NP queries a corresponding queue identifier in the outbound port table based on the IP priority field, and then simultaneously forwards the service traffic and the corresponding queue identifier to the traffic manager TM1. Then, the traffic manager TM1 adds the service traffic to a corresponding queue, and forwards the service traffic according to a priority of the queue, to complete the port-level-based traffic scheduling.

Because the second embodiment and this embodiment are interchangeable, relevant technical details mentioned in the second embodiment are still valid in this embodiment, and the technical effects that can be achieved in the second embodiment can also be achieved in this embodiment, the details are not described herein in order to reduce repetition. Accordingly, relevant technical details mentioned in this embodiment may also be applied to the second embodiment.

In addition, the first scheduling performed on service traffic according to a preset first scheduling strategy includes: adding, according to a sub-interface identifier of the service traffic and a preset first mapping relationship between sub-interface identifiers and first scheduling queues, the service traffic to a first scheduling queue corresponding to the sub-interface identifier of the service traffic in the first mapping relationship; and sending the service traffic according to a priority of the first scheduling queue to which the service traffic is added. A user-level scheduling strategy is selected based on the sub-interface identifier of the service traffic access to perform first scheduling on the service traffic.

In addition, the second scheduling performed on the service traffic according to a preset second scheduling strategy includes: adding, according to a parent interface identifier of the service traffic and a preset second mapping relationship between parent interface identifiers and second scheduling queues, the service traffic to a second scheduling queue corresponding to the parent interface identifier of the service traffic in the second mapping relationship; and sending the service traffic according to a priority of the second scheduling queue to which the service traffic is added. A port-level scheduling strategy is selected based on the parent interface identifier of the service traffic access to perform second scheduling on the service traffic.

In addition, the first scheduling performed on service traffic according to a preset first scheduling strategy includes: adding, according to an interface identifier of the service traffic and a preset first mapping relationship between interface identifiers and first scheduling queues, the service traffic to a first scheduling queue corresponding to the interface identifier of the service traffic in the first mapping relationship, where the interface identifier of the service traffic is a combination of sub-interface identifier and parent interface identifier; and sending the service traffic according to a priority of the first scheduling queue to which the service traffic is added. A user-level scheduling strategy is selected based on a combination of sub-interface identifiers and parent interface identifiers of the service traffic access to perform first scheduling on the service traffic.

In addition, the second scheduling performed on the service traffic according to a preset second scheduling strategy includes: adding, according to an IP priority field of the service traffic and a second mapping relationship between IP priority fields and second scheduling queues, the service traffic to a second scheduling queue corresponding to the IP priority field of the service traffic in the second mapping relationship; and sending the service traffic according to a priority of the second scheduling queue to which the service traffic is added. A port-level scheduling strategy is selected based on the IP priority field of the service traffic to schedule the service traffic after secondary enqueueing.

A fourth embodiment of the present application relates to a server. As shown in FIG. 5, the server includes at least one processor 501; and a memory 502 in communication connection with the at least one processor 501. The memory 502 stores instructions executable by the at least one processor 501 which, when executed by the at least one processor 501, cause the at least one processor 501 to perform the traffic scheduling method according to any one of the first to third embodiments.

The memory 502 and the processor 501 are connected by a bus which may include any number of interconnected buses and bridges. The bus connects various circuits of one or more processors 501 and the memory 502 together. The bus may further connect various other circuits, such as peripherals, regulators, and power management circuits, which are well known in the art and thus are not be further described herein. A bus interface is provided between the bus and a transceiver. The transceiver may be one or more elements, such as multiple receivers and transmitters, to provide units for communicating with various other apparatuses over a transmission medium. Data processed by the processor 501 is transmitted over a wireless medium through an antenna. Further, the antenna receives and transmits the data to the processor 501.

The processor 501 is responsible for managing the bus and general processing, and may also provide a variety of functions, including timing, peripheral interfaces, voltage regulation, power management, and other control functions. The memory 502 may be configured to store data used by the processor 501 to perform operations.

A fifth embodiment of the present application relates to a computer-readable storage medium storing a computer program which, when executed by a processor, causes the processor to perform the method embodiment.

That is, those having ordinary skill in the art may understand that all or some of the steps of the methods in the embodiments may be implemented by a program instructing relevant hardware. The program is stored in a storage medium, and includes several instructions for instructing a device (which may be a single chip microcomputer, a chip, or the like) or a processor to perform all or some of the steps of the methods described in the embodiments of the present application. The storage medium includes various media that can store program code, such as a USB flash drive, a removable hard disk, a read-only memory (ROM), a random access memory (RAM), a magnetic disk, or an optical disc.

Those having ordinary skill in the art may understand that the above embodiments are specific embodiments for implementing the present application. However, in practical applications, various changes in forms and details may be made to the embodiments without departing from the protection scope of the present application, the protection scope being defined by the appended set of claims.

## Claims

1. A traffic scheduling method, comprising:
performing (101) a first scheduling on service traffic according to a preset first scheduling strategy, wherein the first scheduling strategy is a user-level scheduling strategy;
forwarding (102) the service traffic on which the first scheduling is performed to a downlink switching-side interface, comprising:
forwarding the service traffic on which the first scheduling is performed to an uplink line-side interface through a loopback port; and
forwarding the service traffic on which the first scheduling is performed from the uplink line-side interface to the downlink switching-side interface by means of transparent transmission;
performing (103) a second scheduling on the service traffic on which the first scheduling is performed according to a preset second scheduling strategy, wherein the second scheduling strategy s a port-level scheduling strategy; and
sending (104) the service traffic on which the second scheduling is performed through a data sending port.

2. The traffic scheduling method of claim 1, wherein:
performing (101) a first scheduling on service traffic according to a preset first scheduling strategy comprises:
identifying, according to a sub-interface identifier of the service traffic and a preset first mapping relationship between sub-interface identifiers and first scheduling queues, a first scheduling queue corresponding to the sub-interface identifier of the service traffic in the first mapping relationship; and
adding the service traffic to the corresponding first scheduling queue found; and
forwarding (102) the service traffic on which the first scheduling is performed to a data receiving port comprises: sending the service traffic to the data receiving port according to a priority of the first scheduling queue to which the service traffic is added.

3. The traffic scheduling method of claim 2, wherein:
performing (103) a second scheduling on service traffic according to a preset second scheduling strategy comprises:
identifying, according to a parent interface identifier of the service traffic and a preset second mapping relationship between parent interface identifiers and second scheduling queues, a second scheduling queue corresponding to the parent interface identifier of the service traffic in the second mapping relationship; and
adding the service traffic to the corresponding second scheduling queue found; and
sending (104) the service traffic on which the second scheduling is performed through a data sending port comprises: sending the service traffic through the data sending port according to a priority of the second scheduling queue to which the service traffic is added.

4. The traffic scheduling method of claim 3, wherein:
after identifying a first scheduling queue corresponding to the sub-interface identifier of the service traffic in the first mapping relationship, the method further comprises: performing second scheduling on the service traffic according to the preset second scheduling strategy in response to the first scheduling queue corresponding to the sub-interface identifier of the service traffic being not found in the first mapping relationship;
after identifying a second scheduling queue corresponding to the parent interface identifier of the service traffic in the second mapping relationship, the method further comprises: adding the service traffic to a preset queue in response to the second scheduling queue corresponding to the parent interface identifier of the service traffic being not found in the second mapping relationship; and
sending (104) the service traffic on which the second scheduling is performed through a data sending port comprises: sending the service traffic through the data sending port according to a priority of the preset queue to which the service traffic is added.

5. The traffic scheduling method of claim 1, wherein:
performing (101) a first scheduling on service traffic according to a preset first scheduling strategy comprises:
identifying, according to an interface identifier of the service traffic and a preset first mapping relationship between interface identifiers and first scheduling queues, a first scheduling queue corresponding to the interface identifier of the service traffic in the first mapping relationship; and
adding the service traffic to the corresponding first scheduling queue found; wherein the interface identifier of the service traffic is a combination of sub-interface identifier and parent interface identifier; and
forwarding (102) the service traffic on which the first scheduling is performed to a data receiving port comprises: sending the service traffic to the data receiving port according to a priority of the first scheduling queue to which the service traffic is added.

6. The traffic scheduling method of claim 5, wherein:
performing (103) a second scheduling on the service traffic on which the first scheduling is performed according to a preset second scheduling strategy comprises: identifying, according to an Internet protocol, IP, priority field of the service traffic and a second mapping relationship between IP priority fields and second scheduling queues, a second scheduling queue corresponding to the IP priority field of the service traffic in the second mapping relationship; and
sending (104) the service traffic on which the second scheduling is performed through a data sending port comprises: sending the service traffic through the data sending port according to a priority of the second scheduling queue to which the service traffic is added.

7. The traffic scheduling method of claim 3, wherein:
after identifying a first scheduling queue corresponding to the interface identifier of the service traffic in the first mapping relationship, the method further comprises: performing the second scheduling on the service traffic according to the preset second scheduling strategy in response to the first scheduling queue corresponding to the interface identifier of the service traffic being not found in the first mapping relationship;
sending (104) the service traffic on which the second scheduling is performed through a data sending port comprises: sending the service traffic through the data sending port according to a priority of a preset queue to which the service traffic is added.

8. An electronic device, comprising: at least one processor (501); and
a memory (502) in communication connection with the at least one processor (501); wherein:
the memory (502) stores instructions executable by the at least one processor which, when executed by the at least one processor (501), cause the at least one processor (501) to perform the traffic scheduling method of any one of claims 1 to 7.

9. A computer-readable storage medium, storing a computer program which, when executed by a processor, causes the processor to perform the traffic scheduling method of any one of claims 1 to 7.

## Patentansprüche

1. Verkehrsplanungsverfahren, umfassend:
Durchführen (101) einer ersten Planung für den Dienstverkehr gemäß einer voreingestellten ersten Planungsstrategie, wobei die erste Planungsstrategie eine Planungsstrategie auf Benutzerebene ist;
Weiterleiten (102) des Dienstverkehrs, für den die erste Planung durchgeführt wird, an eine kopplungsseitige Downlink-Schnittstelle, umfassend:
Weiterleiten des Dienstverkehrs, für den die erste Planung durchgeführt wird, über einen Loopback-Port an eine netzseitige Uplink-Schnittstelle; und
Weiterleiten des Dienstverkehrs, für den die erste Planung durchgeführt wird, von der netzseitigen Uplink-Schnittstelle zu der kopplungsseitigen Downlink-Schnittstelle mittels transparenter Übertragung;
Durchführen (103) einer zweiten Planung für den Dienstverkehr, für den die erste Planung durchgeführt wird, gemäß einer voreingestellten zweiten Planungsstrategie, wobei die zweite Planungsstrategie eine Planungsstrategie auf Port-Ebene ist; und
Senden (104) des Dienstverkehrs, für den die zweite Planung durchgeführt wird, durch einen Datensendeport.

2. Verkehrsplanungsverfahren nach Anspruch 1, wobei:
das Durchführen (101) einer ersten Planung für den Dienstverkehr gemäß einer voreingestellten ersten Planungsstrategie umfasst:
Identifizieren einer ersten Planungswarteschlange, die der untergeordneten Schnittstellenkennung des Dienstverkehrs in der ersten Zuordnungsbeziehung entspricht, gemäß einer untergeordneten Schnittstellenkennung des Dienstverkehrs und einer voreingestellten ersten Zuordnungsbeziehung zwischen untergeordneter Schnittstellenkennung und ersten Planungswarteschlangen; und
Hinzufügen des Dienstverkehrs zu der entsprechenden ersten gefundenen Planungswarteschlange; und
wobei das Weiterleiten (102) des Dienstverkehrs, für den die erste Planung durchgeführt wird, an einen Datenempfangsport umfasst: Senden des Dienstverkehrs an den Datenempfangsport gemäß einer Priorität der ersten Planungswarteschlange, zu der der Dienstverkehr hinzugefügt wird.

3. Verkehrsplanungsverfahren nach Anspruch 2, wobei:
das Durchführen (103) einer zweiten Planung für den Dienstverkehr gemäß einer voreingestellten zweiten Planungsstrategie umfasst:
Identifizieren einer zweiten Planungswarteschlange, die der übergeordneten Schnittstellenkennung des Dienstverkehrs in der zweiten Zuordnungsbeziehung entspricht, gemäß einer übergeordneten Schnittstellenkennung des Dienstverkehrs und einer voreingestellten zweiten Zuordnungsbeziehung zwischen übergeordneter Schnittstellenkennungen und zweiten Planungswarteschlangen; und
Hinzufügen des Dienstverkehrs zu der entsprechenden zweiten gefundenen Planungswarteschlange; und
wobei das Senden (104) des Dienstverkehrs, für den die zweite Planung durchgeführt wird, durch einen Datensendeport umfasst: Senden des Dienstverkehrs durch den Datensendeport gemäß einer Priorität der zweiten Planungswarteschlange, zu der der Dienstverkehr hinzugefügt wird.

4. Verkehrsplanungsverfahren nach Anspruch 3, wobei:
das Verfahren nach dem Identifizieren einer ersten Planungswarteschlange, die der untergeordneten Schnittstellenkennung des Dienstverkehrs in der ersten Zuordnungsbeziehung entspricht, ferner umfasst: Durchführen einer zweiten Planung für den Dienstverkehr gemäß der voreingestellten zweiten Planungsstrategie als Reaktion darauf, dass die erste Planungswarteschlange, die der untergeordneten Schnittstellenkennung des Dienstverkehrs entspricht, in der ersten Zuordnungsbeziehung nicht gefunden wurde;
das Verfahren nach dem Identifizieren einer zweiten Planungswarteschlange, die der übergeordneten Schnittstellenkennung des Dienstverkehrs in der zweiten Zuordnungsbeziehung entspricht, ferner umfasst: Hinzufügen des Dienstverkehrs zu einer voreingestellten Schlange als Reaktion darauf, dass die zweite Planungswarteschlange, die der übergeordneten Schnittstellenkennung des Dienstverkehrs entspricht, in der zweiten Zuordnungsbeziehung nicht gefunden wurde; und
wobei das Senden (104) des Dienstverkehrs, für den die zweite Planung durchgeführt wird, durch einen Datensendeport umfasst: Senden des Dienstverkehrs durch den Datensendeport gemäß einer Priorität der voreingestellten Schlange, zu der der Dienstverkehr hinzugefügt wird.

5. Verkehrsplanungsverfahren nach Anspruch 1, wobei:
das Durchführen (101) einer ersten Planung für den Dienstverkehr gemäß einer voreingestellten ersten Planungsstrategie umfasst:
Identifizieren einer ersten Planungswarteschlange, die der Schnittstellenkennung des Dienstverkehrs in der ersten Zuordnungsbeziehung entspricht, gemäß einer Schnittstellenkennung des Dienstverkehrs und einer voreingestellten ersten Zuordnungsbeziehung zwischen Schnittstellenkennungen und ersten Planungswarteschlangen; und
Hinzufügen des Dienstverkehrs zu der entsprechenden ersten gefundenen Planungswarteschlange; wobei die Schnittstellenkennung des Dienstverkehrs eine Kombination aus untergeordneter Schnittstellenkennung und übergeordneter Schnittstellenkennung ist; und
wobei das Weiterleiten (102) des Dienstverkehrs, für den die erste Planung durchgeführt wird, an einen Datenempfangsport umfasst: Senden des Dienstverkehrs an den Datenempfangsport gemäß einer Priorität der ersten Planungswarteschlange, zu der der Dienstverkehr hinzugefügt wird.

6. Verkehrsplanungsverfahren nach Anspruch 5, wobei:
das Durchführen (103) einer zweiten Planung für den Dienstverkehr, für den die erste Planung durchgeführt wird, gemäß einer voreingestellten zweiten Planungsstrategie umfasst: Identifizieren einer zweiten Planungswarteschlange, die dem IP-Prioritätsfeld des Dienstverkehrs in der zweiten Zuordnungsbeziehung entspricht, gemäß einem Internetprotokoll-Prioritätsfeld (IP-Prioritätsfeld) des Dienstverkehrs und einer zweiten Zuordnungsbeziehung zwischen IP-Prioritätsfeldern und zweiten Planungswarteschlangen; und
wobei das Senden (104) des Dienstverkehrs, für den die zweite Planung durchgeführt wird, durch einen Datensendeport umfasst: Senden des Dienstverkehrs durch den Datensendeport gemäß einer Priorität der zweiten Planungswarteschlange, zu der der Dienstverkehr hinzugefügt wird.

7. Verkehrsplanungsverfahren nach Anspruch 3, wobei:
das Verfahren nach dem Identifizieren einer ersten Planungswarteschlange, die der Schnittstellenkennung des Dienstverkehrs in der ersten Zuordnungsbeziehung entspricht, ferner umfasst: Durchführen der zweiten Planung für den Dienstverkehr gemäß der voreingestellten zweiten Planungsstrategie als Reaktion darauf, dass die erste Planungswarteschlange, die der Schnittstellenkennung des Dienstverkehrs entspricht, in der ersten Zuordnungsbeziehung nicht gefunden wurde;
wobei das Senden (104) des Dienstverkehrs, für den die zweite Planung durchgeführt wird, durch einen Datensendeport umfasst: Senden des Dienstverkehrs durch den Datensendeport gemäß einer Priorität einer voreingestellten Schlange, zu der der Dienstverkehr hinzugefügt wird.

8. Elektronische Vorrichtung, umfassend: mindestens einen Prozessor (501); und
einen Speicher (502) in Kommunikationsverbindung mit dem mindestens einen Prozessor (501); wobei:
der Speicher (502) von dem mindestens einen Prozessor ausführbare Anweisungen speichert, die, wenn sie von dem mindestens einen Prozessor (501) ausgeführt werden, den mindestens einen Prozessor (501) dazu veranlassen, das Verkehrsplanungsverfahren nach einem der Ansprüche 1 bis 7 durchzuführen.

9. Computerlesbares Speichermedium, das ein Computerprogramm speichert, das, wenn es durch einen Prozessor ausgeführt wird, den Prozessor dazu veranlasst, das Verkehrsplanungsverfahren nach einem der Ansprüche 1 bis 7 durchzuführen.

## Revendications

1. Procédé d'ordonnancement de trafic, comprenant :
réaliser (101) un premier ordonnancement sur le trafic de service selon une première stratégie d'ordonnancement prédéfinie, dans lequel la première stratégie d'ordonnancement est une stratégie d'ordonnancement au niveau de l'utilisateur ;
acheminer (102) le trafic de service sur lequel le premier ordonnancement est réalisé à une interface côté commutation de liaison descendante, comprenant :
acheminer le trafic de service sur lequel le premier ordonnancement est réalisé à une interface côté ligne de liaison montante par l'intermédiaire d'un port de bouclage ; et
acheminer le trafic de service sur lequel le premier ordonnancement est réalisé de l'interface côté ligne de liaison montante à l'interface côté commutation de liaison descendante au moyen d'une transmission transparente ;
réaliser (103) un deuxième ordonnancement sur le trafic de service sur lequel le premier ordonnancement est réalisé selon une deuxième stratégie d'ordonnancement prédéfinie, dans lequel la deuxième stratégie d'ordonnancement est une stratégie d'ordonnancement au niveau du port ; et
envoyer (104) le trafic de service sur lequel le deuxième ordonnancement est réalisé par l'intermédiaire d'un port d'envoi de données.

2. Procédé d'ordonnancement de trafic selon la revendication 1, dans lequel :
réaliser (101) un premier ordonnancement sur le trafic de service selon une première stratégie d'ordonnancement prédéfinie comprend :
identifier, selon un identifiant de sous-interface du trafic de service et une première relation de mappage prédéfinie entre les identifiants de sous-interface et les premières files d'attente d'ordonnancement, une première file d'attente d'ordonnancement correspondant à l'identifiant de sous-interface du trafic de service dans la première relation de mappage ; et
ajouter le trafic de service à la première file d'attente d'ordonnancement correspondante trouvée ; et
acheminer (102) le trafic de service sur lequel le premier ordonnancement est réalisé à un port de réception de données comprend : envoyer le trafic de service au port de réception de données selon une priorité de la première file d'attente d'ordonnancement à laquelle le trafic de service est ajouté.

3. Procédé d'ordonnancement de trafic selon la revendication 2, dans lequel :
réaliser (103) un deuxième ordonnancement sur le trafic de service selon une deuxième stratégie d'ordonnancement prédéfinie comprend :
identifier, selon un identifiant d'interface parent du trafic de service et une deuxième relation de mappage prédéfinie entre les identifiants d'interface parent et les deuxièmes files d'attente d'ordonnancement, une deuxième file d'attente d'ordonnancement correspondant à l'identifiant d'interface parent du trafic de service dans la deuxième relation de mappage ; et
ajouter le trafic de service à la deuxième file d'attente d'ordonnancement correspondante trouvée ; et
envoyer (104) le trafic de service sur lequel le deuxième ordonnancement est réalisé à travers un port d'envoi de données comprend : envoyer le trafic de service à travers le port d'envoi de données selon une priorité de la deuxième file d'attente d'ordonnancement à laquelle le trafic de service est ajouté.

4. Procédé d'ordonnancement de trafic selon la revendication 3, dans lequel :
après avoir identifié une première file d'attente d'ordonnancement correspondant à l'identifiant de sous-interface du trafic de service dans la première relation de mappage, le procédé comprend en outre : réaliser un deuxième ordonnancement sur le trafic de service selon la deuxième stratégie d'ordonnancement prédéfinie en réponse à la première file d'attente d'ordonnancement correspondant à l'identifiant de sous-interface du trafic de service n'étant pas trouvé dans la première relation de mappage ;
après avoir identifié une deuxième file d'attente d'ordonnancement correspondant à l'identifiant d'interface parent du trafic de service dans la deuxième relation de mappage, le procédé comprend en outre : ajouter le trafic de service à une file d'attente prédéfinie en réponse à la deuxième file d'attente d'ordonnancement correspondant à l'identifiant d'interface parent du trafic de service n'étant pas trouvé dans la deuxième relation de mappage ; et
envoyer (104) le trafic de service sur lequel le deuxième ordonnancement est réalisé à travers un port d'envoi de données comprend : envoyer le trafic de service à travers le port d'envoi de données selon une priorité de la file d'attente prédéfinie à laquelle le trafic de service est ajouté.

5. Procédé d'ordonnancement de trafic selon la revendication 1, dans lequel :
réaliser (101) un premier ordonnancement sur le trafic de service selon une première stratégie d'ordonnancement prédéfinie comprend :
identifier, selon un identifiant d'interface du trafic de service et une première relation de mappage prédéfinie entre les identifiants d'interface et les premières files d'attente d'ordonnancement, une première file d'attente d'ordonnancement correspondant à l'identifiant d'interface du trafic de service dans la première relation de mappage ; et
ajouter le trafic de service à la première file d'attente d'ordonnancement correspondante trouvée ; dans lequel l'identifiant d'interface du trafic de service est une combinaison de l'identifiant de sous-interface et de l'identifiant d'interface parent ; et
acheminer (102) le trafic de service sur lequel le premier ordonnancement est réalisé à un port de réception de données comprend : envoyer le trafic de service au port de réception de données selon une priorité de la première file d'attente d'ordonnancement à laquelle le trafic de service est ajouté.

6. Procédé d'ordonnancement de trafic selon la revendication 5, dans lequel :
réaliser (103) un deuxième ordonnancement sur le trafic de service sur lequel le premier ordonnancement est réalisé selon une deuxième stratégie d'ordonnancement prédéfinie comprend : identifier, selon un protocole Internet, IP, le champ de priorité du trafic de service et une deuxième relation de mappage entre les champs de priorité IP et les deuxièmes files d'attente d'ordonnancement, une deuxième file d'attente d'ordonnancement correspondant au champ de priorité IP du trafic de service dans la deuxième relation de mappage ; et
envoyer (104) le trafic de service sur lequel le deuxième ordonnancement est réalisé à travers un port d'envoi de données comprend : envoyer le trafic de service à travers le port d'envoi de données selon une priorité de la deuxième file d'attente d'ordonnancement à laquelle le trafic de service est ajouté.

7. Procédé d'ordonnancement de trafic selon la revendication 3, dans lequel :
après avoir identifié une première file d'attente d'ordonnancement correspondant à l'identifiant d'interface du trafic de service dans la première relation de mappage, le procédé comprend en outre : réaliser le deuxième ordonnancement sur le trafic de service selon la deuxième stratégie d'ordonnancement prédéfinie en réponse à la première file d'attente d'ordonnancement correspondant à l'identifiant de d'interface du trafic de service n'étant pas trouvé dans la première relation de mappage ;
envoyer (104) le trafic de service sur lequel le deuxième ordonnancement est réalisé à travers un port d'envoi de données comprend : envoyer le trafic de service à travers le port d'envoi de données selon une priorité d'une file d'attente prédéfinie à laquelle le trafic de service est ajouté.

8. Dispositif électronique, comprenant : au moins un processeur (501) ; et
une mémoire (502) en connexion de communication avec l'au moins un processeur (501) ; dans lequel :
la mémoire (502) stocke des instructions exécutables par l'au moins un processeur qui, lorsqu'elles sont exécutées par l'au moins un processeur (501), amènent l'au moins un processeur (501) à réaliser le procédé d'ordonnancement de trafic selon l'une quelconque des revendications 1 à 7.

9. Support de stockage lisible par ordinateur, stockant un programme informatique qui, lorsqu'il est exécuté par un processeur, amène le processeur à réaliser le procédé d'ordonnancement de trafic de l'une quelconque des revendications 1 à 7.
